(19) Europäisches Patentamt
European Patent Office
Office européen des brevets

(11) **EP 2 405 316 B1**

(12) # EUROPÄISCHE PATENTSCHRIFT

(45) Veröffentlichungstag und Bekanntmachung des Hinweises auf die Patenterteilung:
**27.11.2013 Patentblatt 2013/48**

(51) Int Cl.:
*E05F 15/00* (2006.01)  *G05B 13/02* (2006.01)
*E05F 15/16* (2006.01)

(21) Anmeldenummer: **11002163.1**

(22) Anmeldetag: **16.03.2011**

(54) **Ansteuerverfahren für einen elektrischen Fensterheber eines Cabriolets**

Control method for an electric window lifter of a convertible car

Procédé de commande pour un levier de fenêtre électrique d'un cabriolet

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2010 DE 102010026366**

(43) Veröffentlichungstag der Anmeldung:
**11.01.2012 Patentblatt 2012/02**

(73) Patentinhaber: **Brose Fahrzeugteile GmbH & Co. Kommanditgesellschaft, Hallstadt**
**96103 Hallstadt (DE)**

(72) Erfinder:
• **Zellmer, René**
**200000 Shanghai (CN)**
• **Kalb, Roland**
**96269 Rossach (DE)**

(74) Vertreter: **FDST Patentanwälte**
**Nordostpark 16**
**90411 Nürnberg (DE)**

(56) Entgegenhaltungen:
**EP-A1- 1 826 352   DE-U1-202005 019 464**
**JP-A- 10 331 524   US-A1- 2008 297 076**

**Beschreibung**

Die Erfindung bezieht sich auf ein Ansteuerverfahren für einen elektrischen Fensterheber zum Schließen einer Seitenscheibe eines Cabriolets. Die Erfindung bezieht sich weiterhin auf eine Vorrichtung zur Durchführung des Ansteuerverfahrens.

Ein elektrischer Fensterheber dient zum automatischen Öffnen und Schließen einer Seitenscheibe eines Fahrzeugs. Beim Schließen der Scheibe wird diese in bekannter Weise zwischen einer unteren Ausgangsposition, in der das Fenster geöffnet ist, in eine obere Endposition verfahren, in der das Fenster geschlossen ist. Der Weg, den die Scheibe dabei zurücklegt, ist im Folgenden als Stellweg bezeichnet. Die momentane Position der Scheibe auf ihrem Stellweg ist als Stellposition bezeichnet.

Elektrische Fensterheber sind im Allgemeinen mit einem sogenannten Einklemmschutz ausgerüstet, d.h. mit einer Funktion der Fensterheberansteuerung bezeichnet, bei der die Scheibe reversiert oder zumindest gestoppt wird, wenn sie beim Schließvorgang auf ein Hindernis stößt. Ein solcher Einklemmschutz dient dazu, sicherzustellen, dass beim automatischen Schließen der Scheibe kein Gegenstand, vor allem aber kein Körperteil, zwischen einem oberen Rand der Scheibe und einem Fensterrahmen - bzw. bei rahmenlosen Fenstern - einem Fahrzeugdach eingeklemmt wird.

Zur Detektion eines Einklemmfalls wird häufig die Drehzahl eines zugeordneten Fensterhebermotors überwacht. Die Drehzahl oder eine daraus abgeleitete andere Betriebsgröße wird dabei fortlaufend mit einem hinterlegten Schwellwert verglichen. Auf einen Einklemmfall wird hierbei dann geschlossen, wenn die Drehzahl unter den Schwellwert abfällt bzw. wenn die andere Betriebsgröße entsprechenden Schwellwert - je nach Definition der Betriebsgröße - über- oder unterschreitet.

Schwankungen der Drehzahl treten jedoch nicht nur im Einklemmfall, sondern auch im gewöhnlichen Betrieb eines Fensterhebers auf, vorrangig beeinflusst von dem über den Stellweg variierenden Laufwiderstand der Scheibe. Zu einem erheblichen Abfall der Drehzahl kommt es dabei regelmäßig insbesondere am oberen Ende des Stellwegs, wenn der obere Rand der Scheibe kurz vor Erreichen der Endposition in die obere Fensterdichtung einfährt. Um bei einem solchen "systembedingten" Abfall der Drehzahl eine Fehlauslösung, d.h. eine fehlerhafte Detektion eines tatsächlich nicht gegebenen Einklemmfalls sicher zu vermeiden, wird der Schwellwert häufig nicht konstant, sondern als Funktion der Stellposition vorgegeben.

Da sich die systembedingte Fluktuation der Drehzahl aber darüberhinaus auch zeitlich ändert, z.B. bedingt durch die sich ändernde Umgebungstemperatur oder die Alterung der Fensterdichtung, ist die stellpositionsabhängige Funktion des Schwellwerts oft nicht fest vorgegeben. Vielmehr wird der stellpositionsabhängige Schwellwert in diesem Fall durch die Fensterhebersteuerung fortlaufend angepasst. Diese Anpassung wird häufig auch als Adaption bezeichnet. Dabei "lernt" die Fensterhebersteuerung, wo eine wiederkehrende Schwergängigkeit vorliegt und setzt in diesem Bereich des Stellwegs den Schwellwert entsprechend herauf oder herab.

Problematisch ist eine solche Adaption bei Cabriolets, da hier eine obere Fensterdichtung nur bei geschlossenem, nicht aber bei geöffnetem Verdeck vorhanden ist. Eine bei geschlossenem Verdeck am oberen Ende des Stellweges erfolgte Schwellwertanpassung würde somit nachteiligerweise bei geöffnetem Verdeck wieder "rückgelernt" werden. Dies kann dann nach dem erneuten Schließen des Verdecks dazu führen, dass der Einlauf der Scheibe in die Verdeckdichtung fehlerhaft als Einklemmfall detektiert wird und die Scheibe entsprechend "fehlreversiert".

Bei herkömmlichen Fensterhebern für Cabriolets wird dieses Problem oft dadurch gelöst, dass die Adaption bei geöffnetem Verdeck vollständig ausgeschaltet wird. Nachteiligerweise kann dies dazu führen, dass die Adaption mitunter über längere Zeitspannen nicht fortlaufend nachgelernt wird. Dies kann zu vielfältigen Funktionsstörungen des Fensterhebers führen, insbesondere wenn nach langen Standzeiten des Fahrzeugs mit geöffnetem Verdeck dasselbe geschlossen wird.

Aus US 2008/0297076 A1 ist ein Ansteuerverfahren für einen elektrischen Fensterheber zum Schließen und Öffnen einer Scheibe einer rahmenlosen Fahrzeugtür bekannt. Dabei wird ein für einen Einklemmschutz des Fensterhebers auslöserelevanter Schwellwert bei geschlossener Fahrzeugtür regelmäßig an den stellpositionsabhängigen Verlauf einer erfassten Betriebsgröße des Fensterhebers, nämlich die Drehzahländerung eines Stellmotors, angepasst, während diese Anpassung bei geöffneter Fahrzeugtür unterbleibt.

Aus JP 10 331524 A ist ein Ansteuerverfahren bekannt, bei dem der Schwellwert bei geöffneter und bei geschlossener Fahrzeugtür an den Verlauf der Betriebsgröße anpasst wird, wobei bei geschlossener Fahrzeugtür ein vorgegebener Wichtungsfaktor auf die Betriebsgröße des Fensternebermotors addiert wird.

Der Erfindung liegt die Aufgabe zugrunde, ein Ansteuerverfahren für einen elektrischen Fensterheber eines Cabriolets anzugeben, das einen besonders fehlersicheren Einklemmschutz gewährleistet. Der Erfindung liegt weiterhin die Aufgabe zugrunde, eine zur Durchführung des Verfahrens geeignete Vorrichtung anzugeben.

Bezüglich des Ansteuerverfahrens wird diese Aufgabe erfindungsgemäß gelöst durch die Merkmale des Anspruchs 1. Danach ist vorgesehen, einen als Funktion der Stellposition der Scheibe vorgegebenen Auslöseschwellwert für den Einklemmschutz eines Fensterhebers sowohl bei geschlossenem als auch bei geöffnetem Verdeck zumindest in einem unteren Bereich des Stellwegs der Scheibe regelmäßig, zweckmäßigerweise bei jedem Schließvorgang der Scheibe, zu adaptieren. Bei dem ersten Scheibenschließvorgang nach einem Schließen des Verdecks wird dabei der adaptierte Verlauf des Schwellwerts In einem oberen Bereich des Stellwegs, und bevorzugt nur in einem oberen Bereich des Stellwegs, durch einen hinterlegten Standard-Schwellwert ersetzt.

Bei dem Schwellwert handelt es sich allgemein um einen Referenzwert einer im Rahmen des Einklemmschutzes erhobenen Betriebsgröße des Fensterhebers, bei dessen Überschreitung oder Unterschreitung der Einklemmschutz einen Einklemmfall detektiert. Im einfachsten Fall wird als Betriebsgröße die Drehzahl des Stellmotors gemessen. Der Einklemmfall wird hierbei dann erkannt, wenn die gemessene Drehzahl unter den Schwellwert abfällt. Als Betriebsgröße kann grundsätzlich aber jede Messgröße herangezogen werden, die einen Rückschluss auf die Stellgeschwindigkeit der Scheibe oder deren Änderung ermöglicht.

Um eine fortwährende, variable Adaption des Schwellwertes zu gewährleisten, ist im Rahmen des Ansteuerverfahrens vorzugsweise vorgesehen, dass die mit dem Schwellwert zu vergleichende Betriebsgröße, z.B. die Drehzahl, bei jedem Schließvorgang der Scheibe aufgenommen und gespeichert wird, so dass der Verlauf der Betriebsgröße in Abhängigkeit der Stellposition - bevorzugt für mehrere vergangene Scheibenschließvorgänge - bekannt ist. Der stellpositionsabhängige Verlauf des Schwellwerts wird dabei nach Maßgabe des aufgenommenen Betriebsgrößenverlaufs derart verändert, dass ein fehlerhaftes Auslösen des Einklemmschutzes aufgrund der systembedingten Fluktuation der Betriebsgröße sicher vermieden wird.

In besonders einfacher Ausführung des Adaptionsprozesses wird als Schwellwertverlauf jeweils der während des vorangegangenen Schließprozesses gemessene Verlauf der Betriebsgröße abzüglich bzw. zuzüglich eines vorgegebenen Toleranzbereichs herangezogen. In einer numerisch stabileren Ausführung des Verfahrens ist abweichend hiervon vorgesehen, dass der Schwellwert für jede Stellposition aus einer gleitenden Mittelwertbildung über die während einer Anzahl vorangegangener Schließvorgänge an der gleichen Stellposition gemessenen Werte der Betriebsgröße abgeleitet wird. Bei der letzteren Verfahrensvariante wird der Schwellwert sukzessive in kleinen Schritten über mehrere Schließvorgänge hinweg an neue Umgebungsbedingungen angepasst.

Der "obere Bereich" des Stellwegs ist in bevorzugter Definition im Wesentlichen durch den Bereich des Stellwegs gegeben, in dem die Scheibe mit ihrem oberen Rand in die Verdeckdichtung, bzw. in eine Dichtungsnut derselben, einfährt. Als "unterer Bereich" des Stellwegs ist in Abgrenzung hiergegen bevorzugt derjenige Bereich des Stellwegs bezeichnet, in dem der obere Rand der Scheibe nicht in die Dichtung eingreift.

Durch die fortlaufende Adaption des Schwellwerts, auch bei geöffnetem Verdeck, werden längere Adaptionslücken vermieden, so dass die Adaption des Schwellwerts zumindest im unteren Bereich des Stellwegs stets aktuell gehalten werden kann. Durch die feste Vorgabe des Schwellwerts im oberen Stellwegbereich zumindest beim ersten Schließvorgang der Scheibe nach dem Schließen des Verdecks, werden dabei gleichzeitig Fehlfunktionen nach dem Schließen des Verdecks ausgeschlossen.

Erfindungsgemäß wird der Schwellwert im oberen Stellwegbereich nur für den ersten Scheibenschließvorgang nach dem Schließend es Verdecks (durch den hinterlegten Standard-Schwellwert) fest vorgegeben. Ab dem zweiten Scheibenschließvorgang nach dem Schließen des Verdecks (falls bzw. solange das Verdeck noch immer geschlossen ist) wird der Schwellwert auch in dem oberen Stellwegbereich vorzugsweise wieder adaptiert.

In einer besonders einfach zu realisierenden Ausführung des Verfahrens wird der Standard-Schwellwert in dem oberen Stellwegbereich als stellpositionsunabhängige Konstante vorgegeben. Es kann aber auch ein stellpositionsabhängiges Standard-Schwellwertprofil hinterlegt sein. In einer alternativen Verfahrensvariante wird der Schwellwert in dem oberen Stellwegbereich nach dem erneuten Schließen des Verdecks auf den letzten Verlauf zurückgesetzt, der hier vor dem unmittelbar vorausgegangenen Öffnen des Verdecks bestimmt worden war. Mit anderen Worten wird für den ersten Scheibenschließvorgang nach dem Schließen des Verdecks das letzte bei geschlossenem Verdeck "gelernte" Profil gemerkt und nach dem erneuten Schließen des Verdecks wieder herangezogen.

Bei geöffnetem Verdeck wird der Schwellwert bevorzugt im gesamten Stellweg adaptiert.

Bezüglich der Steuereinheit wird oben genannte Aufgabe erfindungsgemäß gelöst durch die Merkmale des Anspruchs 6. Danach ist die Steuereinheit dazu eingerichtet, einen elektrischen Fensterheber für eine (Seiten-)Scheibe eines Cabriolets gemäß dem vorstehend beschriebenen Ansteuerverfahren in einer der beschriebenen Varianten automatisch anzusteuern.

In vorteilhafter Ausgestaltung handelt es sich bei der Steuereinheit um einen Milkroprozessor, in dem Steuersoftware zur Verfahrensdurchführung implementiert ist. Die Steuereinheit ist in diesem Fall softwaretechnisch zur Verfahrensdurchführung eingerichtet in dem Sinne, dass die Steuereinheit das erfindungsgemäße Verfahren in ihrem bestimmungsgemäßen Betrieb automatisch durchführt. Die Steuereinheit kann alternativ aber auch schaltungstechnisch zur Durchführung des erfindungsgemäßen Verfahrens eingerichtet sein, d.h. eine nicht-programmierbare elektronische Schaltung enthalten, die im bestimmungsgemäßen Betrieb das erfindungsgemäße Verfahren durchführt. Die Steuereinheit kann in dieser Variante insbesondere in Form eines sogenannten ASIC realisiert sein.

Zweckmäßigerweise umfasst die Steuereinheit als funktionale Bestandteile seiner Steuersoftware ein Einklemmschutzmodul sowie einen Schwellwertgeber, wobei letzterer dazu eingerichtet ist, den Schwellwert gemäß dem vorstehend beschriebenen Verfahren zu erzeugen und dem Einklemmschutzmodul vorzugeben.

Nachfolgend wird ein Ausführungsbeispiel der Erfindung anhand einer Zeichnung näher erläutert. Darin zeigen:

Fig. 1 in schematischer Darstellung eine Steuereinheit für einen Fensterheber zum elektrischen Öffnen und Schließen einer Seitenscheibe eines Cabriolets,

Fig. 2 in einem Ablaufdiagramm ein von der Steuereinheit automatisch durchgeführtes Ansteuerverfahren,

Fig. 3 in einem Diagramm schematisch vereinfacht den Verlauf der Drehzahl eines Fensterhebermotors in Abhängigkeit einer Stellposition der Seitenscheibe, sowie den entsprechenden Verlauf eines zur Erkennung eines Einklemmfalls mit einer Drehzahldifferenz verglichenen Schwellwerts während des ersten Schließvorgangs der Seitenscheibe nach dem Schließen des Verdecks, und

Fig. 4 in Darstellung gemäß Fig. 3 den jeweiligen Verlauf der Drehzahl und des Schwellwerts während des zweiten Schließvorgangs der Seitenscheibe nach dem Schließen des Verdecks.

Einander entsprechende Teile und Größen sind in allen Figuren stets mit den gleichen Bezugszeichen versehen.

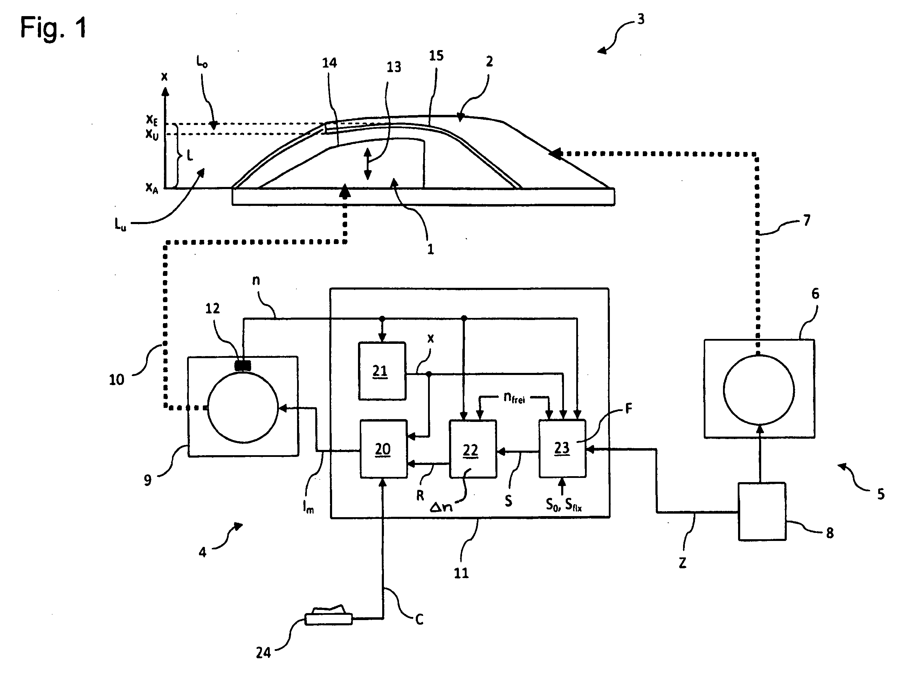

Fig. 1 zeigt in einer schematischen Seitenansicht eine teilweise geöffnete (Seiten-)Scheibe 1 sowie ein geschlossenes Verdeck 2 eines - nur grob ausschnittsweise angedeuteten - Cabriolets 3. In der unteren Hälfte der Darstellung sind ein Fensterheber 4 zum automatischen Öffnen und Schließen der Scheibe 1 sowie eine Stellvorrichtung 5 zum automatischen Öffnen und Schließen des Verdecks 2 schematisch skizziert.

Die Stellvorrichtung 5 umfasst einen elektrischen Motor 6, der über eine Stellmechanik 7 auf das Verdeck 2 wirkt. Die Stellvorrichtung 5 umfasst weiterhin eine den Motor 6 ansteuernde Steuereinheit 8.

Der Fensterheber 4 umfasst einen weiteren elektrischen Motor 9, der über eine Stellmechanik 10 auf die Scheibe 1 wirkt. Der Fensterheber 4 umfasst weiterhin eine den Motor 9 ansteuernde Steuereinheit 11. Der Fensterheber 4 umfasst weiterhin einen dem Motor 9 zugeordneten Drehzahlmesser 12, der im Betrieb des Fensterhebers 4 die Drehzahl n des Motors 9 bestimmt und als Maß für die Stellgeschwindigkeit der Scheibe 1 an die Steuereinheit 11 ausgibt. Bei dem Drehzahlsensor 12 handelt es sich bevorzugt um einen Hall-Sensor, der mit einem auf der Motorwelle des Motors 9 aufgebrachten Ringmagneten zusammenwirkt.

Durch den Fensterheber 4 wird die Scheibe 1 in einer im Wesentlichen senkrechten Linearbewegung verschoben, die durch einen Pfeil 13 gekennzeichnet ist. Bei einem Schließvorgang der Scheibe 1 durchläuft diese mit ihrem oberen Rand 14 einen Stellweg L. Von einem vollständig geöffneten Zustand, entsprechend einer Ausgangsposition $x_A$, durchläuft der Rand 14 zunächst einen unteren Stellwegbereich $L_u$. Der untere Stellwegbereich $L_u$ wird nach oben hin begrenzt durch eine Übergangsposition $x_U$, aber der der Rand 14 eine am Verdeck 2 angebrachte Dichtung 15 nahezu berührt. Nach Überschreiten der Übergangsposition $x_U$ durchläuft der Rand 14 der Scheibe 1 einen oberen Stellbereich $L_o$, in welchem der Rand 14 in eine Nut der Dichtung 15 einläuft, bis der Rand 14 der Scheibe 1 an einer Endposition $x_E$ anlangt, an der die Scheibe 1 vollständig geschlossen ist.

Die Steuereinheit 11 umfasst insbesondere ein Schaltmodul 20, ein Stellpositionsbestimmungsmodul 21, ein Einklemmschutzmodul 22 und einen Schwellwertgeber 23.

Das Schaltmodul 20 dient zur unmittelbaren Beschaltung des Motors 9, d.h. zum An- und Ausschalten sowie Reversieren des dem Motor 9 zugeführten Motorstroms $I_m$. Das Schaltmodul 20 ist seinerseits angesteuert u.a. durch Schaltsignale C eines von einem Fahrzeuginsassen betätigbaren Fensterhebertasters 24.

Das Stellpositionsbestimmungsmodul 21 ist dazu eingerichtet, durch Integration über die von dem Drehzahlsensor 12 zugeführte Drehzahl n die aktuelle Stellposition x der Scheibe 1 entlang ihres Stellwegs L zu ermitteln.

Das Einklemmschutzmodul 22 ist dazu eingerichtet, durch Analyse der vom Drehzahlsensor 12 zugeführten Drehzahl n einen Einklemmfall zu erkennen, bei dem die Schließbewegung der Scheibe 1 durch ein sich im Stellweg L befindliches Hindernis behindert oder sogar blockiert ist.

Das Einklemmschutzmodul 22 bildet hierzu fortlaufend eine Drehzahldifferenz An zwischen einer in einem Speicher der Ansteuereinheit 11 als Konstante hinterlegten Freilaufdrehzahl $n_{frei}$ und der vom Drehzahlsensor 12 erfassten Drehzahl n:

$$\Delta n = n_{frei} - n \qquad \text{Glg. 1}$$

Die Freilaufdrehzahl $n_{frei}$ entspricht hierbei der stationären Enddrehzahl, die der Motor 9 im Durchschnitt typischerweise während der Freilaufphase eines Schließvorgangs erreicht. Die Drehzahldifferenz $\Delta n$ hat somit in der Freilaufphase des Schließvorgangs überwiegend näherungsweise den Wert Null, und nimmt umso größere Werte an, je mehr die gemessene Drehzahl n gegenüber der Freilaufdrehzahl $n_{frei}$ abfällt.

Das Einklemmschutzmodul 22 vergleicht die ermittelte Drehzahldifferenz An laufend mit einem Schwellwert S. Auf das Vorliegen eines Einklemmfalles schließt das Einklemmschutzmodul 30 dabei stets dann, wenn die Drehzahldifferenz An während eines Schließvorgangs der Scheibe 1 den Schwellwert S übersteigt:

$$\Delta n > S \qquad\qquad\qquad \text{Glg. 2}$$

Sobald diese Auslösebedingung erfüllt ist, gibt das Einklemmschutzmodul 22 ein Revisionssignal R an das Schaltmodul 20 aus, aufgrund dessen das Schaltmodul 20 durch entsprechende Ansteuerung des Motors 9 die Scheibenbewegung reversiert. Die Schließbewegung der Scheibe 1 wird also bei Erkennung des Einklemmfalls gestoppt, und die Scheibe 1 wird wieder um ein vorgegebenes Stellwegintervall geöffnet. Der Schwellwert S wird dem Einklemmschutzmodul 22 seinerseits von dem Schwellwertgeber 23 übermittelt.

Im Normalbetrieb des Fensterhebers 4 ermittelt der Schwellwertgeber 23 den Schwellwert S als Funktion der Stellposition x,

$$S = S(x), \qquad\qquad\qquad \text{Glg. 3}$$

indem es den Schwellwert S in einem iterativen Lernprozess an den stellpositionsabhängigen Verlauf der Drehzahl $n = n(x)$ einer Mehrzahl N von vorausgegangenen Schließvorgängen anpasst. Konkret speichert der Schwellwertgeber 23 für die vorgegebene Anzahl N von aufeinanderfolgenden vergangenen Schließvorgängen jeweils den stellpositionsabhängigen Verlauf der Drehzahl $n = n(x)$, und bestimmt den Stellwert S dann für jede Stellposition x durch gleitende Mittelwertbildung über die Drehzahlwerte $n_i(x)$, die im Zuge der vorausgegangenen Schließvorgänge jeweils an derselben Stellposition x erfasst wurden:

$$S(x) = S_0 + \Delta n_{sys}(x) \qquad \text{mit} \qquad\qquad \text{Glg. 4}$$

$$\Delta n_{sys}(x) = n_{frei} - \frac{1}{N} \cdot \sum_{i=1}^{N} n_i(x) \qquad\qquad \text{Glg. 5}$$

In der Nomenklatur der Glg. 5 steht i = 1 als Zählindex für den letzten, d.h. unmittelbar vorausgegangenen Schließvorgang, i = 2 als Zählindex für den zweitletzten Schließvorgang, etc. In bevorzugter Ausführung des Verfahrens werden die Drehzahlwerte $n_i(x)$ von drei vorausgegangenen Schließvorgängen bei der Mittelwertbildung berücksichtigt (d.h. N = 3).

Die Größe $S_0$ in Glg. 4 bezeichnet einen sogenannten Basisschwellwert. Die Größe $\Delta n_{sys}$ ist nachfolgend als regelmäßig wiederkehrende bzw. systembedingte Drehzahldifferenz bezeichnet.

Der Schwellwertgeber 23 ermittelt den Schwellwert S grundsätzlich unabhängig von der Verdeckstellung, also sowohl bei geöffnetem Verdeck 2 als auch bei geschlossenem Verdeck 2 stets nach Glg. 4 und 5. Lediglich unmittelbar nach dem Schließen des Verdecks 2 ermittelt der Schwellwertgeber 23 den Schwellwert S auf eine hiervon abweichende Weise, indem er den Schwellwert S für Stellpositionen x im oberen Stellwegbereich $L_o$ konstant auf einen vorgegebenen, erhöhten Wert $S_0 + S_{fix}$ setzt:

$$S(x) = \begin{cases} S_0 + \Delta n_{sys}(x) & \text{für } x_A \le x < x_U \\ S_0 + S_{fix} & \text{für } x_U \le x \le x_E \end{cases} \qquad \text{Glg. 6}$$

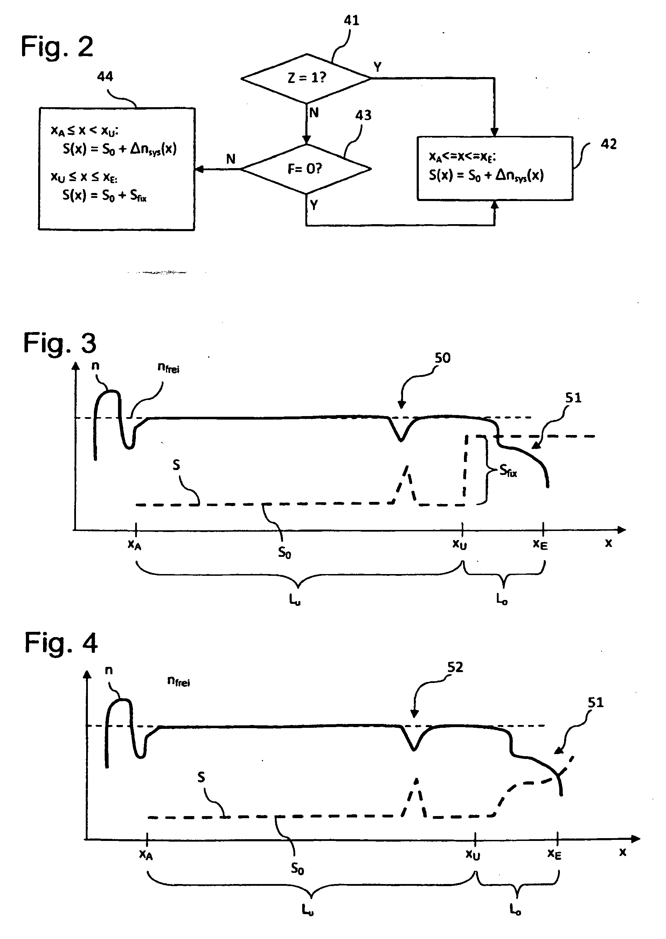

Konkret führt der Schwellwertgeber 23 hierbei automatisch das in Fig. 2 schematisch dargestellte Verfahren durch, bei dem es in einer ersten Abfrage 41 zunächst abfragt, ob das Verdeck 2 geöffnet ist. Es greift hierzu auf ein Verdeckzustandssignal Z zu, das ihm von der Steuereinheit 8 zugeführt wird. Das Verdeckzustandssignal Z hat beispielsweise einen Wert Z = 1, wenn das Verdeck 2 geöffnet ist, und einen Wert Z = 0, wenn das Verdeck 2 geschlossen ist.

Wenn sich das Verdeck 2 als geöffnet erweist, (Pfad Y in Abfrage 41), adaptiert der Schwellwertgeber 23 den Schwellwert S in Schritt 42 bereichsunabhängig, also für den gesamten Stellweg L nach den Glg. 4 und 5.

Andernfalls (Pfad N in Abfrage 41) prüft der Schwellwertgeber 23 in einer weiteren Abfrage 43, ob nach dem Schließen des Verdecks 2 bereits ein Schließvorgang der Scheibe 1 durchgeführt wurde. Der Schwellwertgeber 23 greift hierbei auf ein internes Statusflag F zurück, das er beispielsweise auf den Wert F = 1 setzt, sobald er an dem Zustandswechsel des Verdeckzustandssignals Z von Z = 1 auf Z = 0 erkennt, dass das Verdeck 2 geschlossen wurde, und das er beim ersten Schließen der Scheibe 1 nach dem Schließen des Verdecks 2 wieder auf den Wert F = 0 zurücksetzt.

Falls der Schwellwertgeber 23 bei dieser Prüfung feststellt, dass die Scheibe 2 nach dem Schließen des Verdecks 2 bereits mindestens einmal geschlossen wurde (Zweig Y in Abfrage 43), springt er auf Schritt 42 und adaptiert somit den den Schwellwert S über den gesamten Stellweg L nach den Glg. 4 und 5.

Andernfalls (Zweig N in Abfrage 43) adaptiert der Schwellwertgeber 23 den Schwellwert S nach Glg. 6 (Schritt 44).

Die Steuereinheit 11 ist in bevorzugter Ausführung im Wesentlichen durch einen Mikrocontroller gebildet, in dem das Stellpositionsbestimmungsmodul 21, das Einklemmschutzmodul 22 und der Schwellwertgeber 23 als funktionale Bestandteile einer Steuersoftware implementiert sind. Das Schaltmodul 20 kann grundsätzlich auch rein softwaretechnisch realisiert sein. In zweckmäßiger Ausführung umfasst das Schaltmodul 20 aber elektronische oder elektromechanische Schaltelemente zur Schaltung und Reversierung des Motorstroms $I_m$.

Der typische Verlauf der Drehzahl n während eines Schließvorgangs der Scheibe 1 bei geschlossenem Verdeck 2 ist in den Fig. 3 und 4 jeweils in einem Diagramm gegen die Stellposition x dargestellt. Miteingetragen in diesen Diagrammen ist jeweils der stellpositionsabhängige Verlauf des Schwellwerts S. Fig 3 zeigt hierbei den Verlauf des Schwellwerts S beim ersten Schließvorgang der Scheibe 1 nach dem Schließen des Verdecks 2. Fig. 4 zeigt den Verlauf des Schwellwerts S bei dem Zweiten Schließvorgang der Scheibe 1 bei weiterhin geschlossenem Verdeck 2.

Erkennbar ist aus den Fig. 3 und 4, dass die Drehzahl n über den Großteil des unteren Stellwegbereichs $L_u$ im Wesentlichen der Freilaufdrehzahl $n_{frei}$ entspricht. Abweichend hiervon kommt es im oberen Drittel des unteren Stellwegbereichs $L_u$ zu einem lokalen, aber deutlichen Drehzahleinbruch 50, der beispielsweise durch eine witterungsbedingte Verformung einer seitlichen Fensterdichtung verursacht ist. Um zu vermeiden, dass die Scheibe 1 aufgrund von dieser Schwergängigkeit bei jedem Schließvorgang fehlerhaft reversiert wird, wird in diesem Bereich der Schwellwert S betragsmäßig um einen entsprechenden Betrag gegenüber dem Basisschwellwert $S_0$ erhöht, so dass das Einklemmschutzmodul 22 erst bei einem noch größeren Drehzahleinbruch anspricht. Der Drehzahleinbruch 50 tritt unabhängig von der Stellung des Verdecks 2 auf.

Ein weiterer Drehzahleinbruch 51 im oberen Stellwegbereich $L_o$ wird durch den Einlauf der Scheibe 1 in die Dichtung 15 verursacht. Dieser Drehzahleinbruch 51 tritt naturgemäß nur bei geschlossenem Verdeck 2 auf. Da der Schwellwert S unmittelbar nach dem Schließen des Verdecks 2 an den geänderten Drehzahlverlauf noch nicht adaptiert ist, könnte bei unmodifiziertem Schwellwertverlauf der Drehzahleinbruch 51 zu einem Fehlreversieren der Scheibe 1 führen. Indem der Schwellwert S beim ersten Schließen der Scheibe 1 nach dem Schließen des Verdecks 2 im oberen Stellwegbereich $L_o$ gemäß Glg. 6 um den Offset $S_{fix}$ erhöht wird (Fig. 3), wird dieses Fehlerrisiko sicher beseitigt. Aus Fig. 4 ist ersichtlich, dass sich der Verlauf des Schwellwerts S im Zuge der folgenden Schließvorgänge der Scheibe 1 sukzessive an den tatsächlichen Verlauf der Drehzahl n anpasst.

Die linksseitig erkennbaren Drehzahlschwankungen zu Beginn des Schließvorgangs werden im Wesentlichen durch das Spiel in der Fensterhebermechanik verursacht, und werden daher von dem Schwellwertgeber 23 nicht berücksichtigt.

**Bezugszeichenliste**

| | | | | |
|---|---|---|---|---|
| 1 | Scheibe | $\Delta n$ | Drehzahldifferenz |
| 2 | Verdeck | $\Delta n_{sys}$ | Drehzahldifferenz |
| 3 | Cabriolet | n | Drehzahl |
| 4 | Fensterheber | $n_{frei}$ | Freilaufdrehzahl |
| 5 | Stellvorrichtung | x | Stellweg |
| 6 | Motor | $x_A$ | Ausgangsposition |
| 7 | Stellmechanik | $x_E$ | Endposition |
| 8 | Steuereinheit | $x_U$ | Übergangsposition |
| 9 | Motor | C | Schaltsignal |
| 10 | Stellmechanik | F | Statusflag |
| 11 | Steuereinheit | $I_m$ | Motorstrom |
| 12 | Drehzahlmesser | L | Stellweg |
| 13 | Pfeil | $L_o$ | (oberer) Stellwegbereich |
| 14 | Rand | $L_u$ | (unterer) Stellwegbereich |
| 15 | Dichtung | R | Revisionssignal |
| 20 | Schaltmodul | S | Schwellwert |

(fortgesetzt)

| 21 | Stellpositionsbestimmungsmodul | $S_0$ | Basisschwellwert |
|----|-------------------------------|-------|------------------|
| | | $S_{fix}$ | Offset |
| 22 | Einklemmschutzmodul | Z | Verdeckzustandssignal |
| 23 | Schwellwertgeber | | |
| 24 | Fensterhebertaster | | |
| 41 | Abfrage | | |
| 42 | Schritt | | |
| 43 | Abfrage | | |
| 44 | Schritt | | |
| 50 | Drehzahleinbruch | | |
| 51 | Drehzahleinbruch | | |

**Patentansprüche**

1. Ansteuerverfahren für einen elektrischen Fensterheber (4) zum Schließen und Öffnen einer Scheibe (1) eines Cabriolets (3), bei dem ein für einen Einklemmschutz des Fensterhebers (4) auslöserelevanter Schweilwert (S) sowohl bei geschlossenem als auch bei geöffnetem Verdeck (2) des Cabriolets (3) zumindest in einem unteren Stellwegbereich ($L_u$) der Scheibe (1) regelmäßig an den stellpositionsabhängigen Verlauf einer erfassten Betriebs-größe ($\Delta n$) des Fensterhebers (4) angepasst wird. bei dem zumindest bei dem ersten Scheibenschließvorgang nach einem Schließen des Verdecks (2) der Schwellwert (S) in einem oberen Stellwegbereich ($L_o$) der Scheibe (1) fest vorgegeben wird, und bei dem der Schwellwert (S) ab dem zweiten Scheibenschließvorgang nach dem Schließen des Verdecks (2) auch in dem oberen Stellwegbereich ($L_o$) stellpositionsabhängig an den stellpositionsabhän-gigen Verlauf der erfassten Betriebsgröße (An) angepasst wird.

2. Ansteuerverfahren nach Anspruch 1,
bei dem der Schwellwert (S) beim ersten Scheibenschließvorgang nach einem Schließen des Verdecks (2) in dem oberen Stellwegbereich ($L_o$) konstant mit einem einen Basisschwellwert ($S_0$) übersteigenden Betrag vorgegeben wird.

3. Ansteuerverfahren nach Anspruch 1,
bei dem der Schwellwert (S) beim ersten Scheibenschließvorgang nach einem Schließen des Verdecks (2) in dem oberen Stellwegbereich ($L_o$) an ein stellpositionsabhängig hinterlegtes Standard-Schwellwertprofil angepasst wird.

4. Ansteuerverfahren nach Anspruch 3,
bei dem der Schwellwert (S) beim ersten Scheibenschließvorgang nach einem Schließen des Verdecks (2) in dem oberen Stellwegbereich ($L_o$) an den Werteverlauf angepasst wird, den der Schwellwert (S) in diesem Stellwegbereich ($L_0$) vor dem vorausgegangenen Öffnen des Verdecks (2) aufwies.

5. Steuereinheit (11), die dazu eingerichtet ist, einen zum Öffnen und Schließen einer Scheibe (1) eines Cabriolets (3) vorgesehenen elektrischen Fensterheber (4) gemäß dem Ansteuerverfahren nach einem der Ansprüche 1 bis 4 anzusteuern.

**Claims**

1. Control method for an electric window lift (4) for closing and opening a window (1) of a convertible (3), in which a threshold value (S), which is relevant for triggering an anti-pinch protection of the window lift (4), is regularly adjusted to the course of a recorded operating parameter ($\Delta n$), at least in a lower displacement region ($L_u$) of the window (1), whilst the roof (2) of the convertible (3) is both closed and open (2), said course being dependent on the actuation position, in which, at least during the first window closing procedure after closing the roof (2), the threshold value (S) is fixedly predetermined in an upper displacement region ($L_o$) of the window (1), and in which the threshold value (S) is also adjusted in the upper displacement region ($L_o$), depending on the actuation position, to the course of the recorded operating parameter ($\Delta n$), said course being dependent on the actuation position, from the second window closing procedure after closing the roof (2).

**2.** Control method according to claim 1,
in which the threshold value (S) during the first window closing procedure after closing the roof (2) in the upper displacement region ($L_o$) is predetermined in a manner that is constant with an amount in excess of a base threshold value ($S_0$).

**3.** Control method according to claim 1,
in which the threshold value (S) during the first window closing procedure after closing the roof (2) in the upper displacement region ($L_o$) is adjusted to a standard threshold value profile, which is provided in a manner that is dependent on the actuation position.

**4.** Control method according to claim 3,
in which the threshold value (S) during the first window closing procedure after closing the roof (2) in the upper displacement region ($L_o$) is adjusted to the value pattern, which the threshold value (S) had in this displacement region ($L_o$) before the preceding opening of the roof (2).

**5.** Control unit (11), which is set up to control an electric window lift, provided to open and close a window (1) of a convertible (3), according to the control method according to one of claims 1 to 4.

**Revendications**

**1.** Procédé de commande pour un lève-vitre électrique (4) destiné à fermer et ouvrir une vitre (1) d'un cabriolet (3), d'après lequel on adapte régulièrement une valeur de seuil (S) importante pour le déclenchement d'une protection anti-pincement du lève-vitre (4), pour une capote (2) aussi bien fermée qu'ouverte du cabriolet (3), au moins dans une plage de déplacement de réglage inférieure (Lu) de la vitre (1), à la loi de variation fonction de la position de réglage, d'une grandeur de fonctionnement ($\Delta n$) relevée du lève-vitre (4),
d'après lequel, au moins lors de la première phase de fermeture de vitre après une fermeture de la capote (2), on prescrit de manière fixe la valeur de seuil (S) dans une plage de déplacement de réglage supérieure ($L_o$) de la vitre (1), et d'après lequel, à partir de la deuxième phase de fermeture de vitre après la fermeture de la capote (2), on adapte la valeur de seuil (S) en fonction de la position de réglage, également dans la plage de déplacement de réglage supérieure ($L_o$), à la loi de variation, fonction de la position de réglage, de la grandeur de fonctionnement ($\Delta n$) relevée.

**2.** Procédé de commande selon la revendication 1,
d'après lequel, lors de la première phase de fermeture de vitre après une fermeture de la capote (2), on prescrit de manière constante la valeur de seuil (S), dans la plage de déplacement de réglage supérieure ($L_o$), avec une valeur dépassant une valeur de seuil de base ($S_o$).

**3.** Procédé de commande selon la revendication 1,
d'après lequel, lors de la première phase de fermeture de vitre après une fermeture de la capote (2), on adapte la valeur de seuil (S), dans la plage de déplacement de réglage supérieure ($L_o$), à un profil standard de valeur de seuil enregistré en fonction de la position de réglage.

**4.** Procédé de commande selon la revendication 3,
d'après lequel, lors de la première phase de fermeture de vitre après une fermeture de la capote (2), on adapte la valeur de seuil (S), dans la plage de déplacement de réglage supérieure ($L_o$), à la loi de variation de valeur que présentait la valeur de seuil (S) dans cette plage de déplacement de réglage ($L_o$) avant l'ouverture précédente de la capote (2).

**5.** Unité de commande (11), qui est conçue pour commander un lève-vitre électrique (4) prévu pour l'ouverture et la fermeture d'une vitre (1) d'un cabriolet (3), conformément au procédé de commande selon l'une des revendications 1 à 4.

Fig. 1

## Fig. 2

41

Z = 1?

Y

44

$x_A \leq x < x_U$:
$S(x) = S_0 + \Delta n_{sys}(x)$

$x_U \leq x \leq x_E$:
$S(x) = S_0 + S_{fix}$

N

43

N

F = 0?

Y

42

$x_A <= x <= x_E$:
$S(x) = S_0 + \Delta n_{sys}(x)$

## Fig. 3

$n$

$n_{frei}$

50

51

$S$

$S_0$

$S_{fix}$

$x_A$   $x_U$   $x_E$   $x$

$L_u$   $L_o$

## Fig. 4

$n$

$n_{frei}$

52

51

$S$

$S_0$

$x_A$   $x_U$   $x_E$   $x$

$L_u$   $L_o$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 200810297076 A1
- JP 10331524 A